# EUROPEAN PATENT APPLICATION

(11) **EP 4 661 182 A1**
(43) Date of publication of application: **10.12.2025**
(21) Application number: 23919929.2
(22) Date of filing: 07.12.2023
(51) Int. Cl.: H01M 50/289, H01M 50/213, H01M 50/291

(54) **POWER SUPPLY DEVICE AND METHOD FOR MANUFACTURING POWER SUPPLY DEVICE**

(30) Priority: 31.01.2023 JP 2023013453
(71) Applicant: Panasonic Energy Co., Ltd., Osaka 570-8511 (JP)
(72) Inventor: KOHARA, Hikaru, Moriguchi-shi, Osaka 570-8511 (JP)
(74) Representative: Eisenführ Speiser
(86) International application number: PCT/JP2023/043805
(87) International publication number: WO 2024/161794

(57) **Abstract**

A split battery holder is securely bonded together while retaining a plurality of rechargeable battery cells. The power source apparatus 100 holds a plurality of rechargeable battery cells 1 in a first battery holder 2A and a second battery holder 2B joined together through a bonding layer 4. The first battery holder 2A is provided with a plurality of first holder cylindrical sections 21, a first mating surface 22, and a plurality of side wall extensions 23. Cell exposed regions 24 are established between adjacent side wall extensions 23, and filling grooves 41, which hold adhesive 40, are formed in regions surrounded by rechargeable battery cells 1 and side wall extensions 23. The second battery holder 2B is provided with a plurality of second holder cylindrical sections 31, a second mating surface 32, and protruding posts 33. The protruding posts 33 insert into filling grooves 41 but are configured not to make contact with the first mating surface 22 or the side wall extensions 23. When the first battery holder 2A and the second battery holder 2B are connected, protruding posts 33 are inserted in the filling grooves 41 and are bonded and attached to the first battery holder 2A and rechargeable battery cells 1 via the bonding layer 4.

## Description

### TECHNICAL FIELD

The present disclosure relates to a power source apparatus that retains a large number of rechargeable battery cells in a battery holder and to the power source apparatus method of manufacture.

### BACKGROUND ART

Power source apparatus provided with a large number of battery cells that can be recharged such as lithium-ion rechargeable battery cells have been developed for driving electrical apparatus such as electric scooters, electric automobiles, and construction heavy equipment. In these power source apparatus, output voltage can be increased by connecting the rechargeable battery cells in series and charging and discharging current can be increased by connecting the battery cells in parallel. To connect the plurality of rechargeable battery cells in a given arrangement, the power source apparatus stores the battery cells in a battery holder. The battery holder is formed with a plurality of cylindrical sections to house the rechargeable battery cells, and by storing rechargeable battery cells in those cylindrical sections, a plurality of rechargeable battery cells can be retained in parallel orientation. This type of battery holder can be implemented with a split holder that is divided at the middle in the lengthwise direction of the rechargeable battery cells and holds a plurality of rechargeable battery cells by sandwiching them from both sides (e.g. refer to Patent Literature 1). The divided holder pieces of this type of battery holder are held together, for example, by screw attachment.

Meanwhile, recent demand for high capacity and high output has increased the number of rechargeable battery cells used in these types of power source apparatus. At the same time demand for compactness and reduced weight has made it necessary to reduce spacing between adjacent rechargeable battery cells. As a result, it has become difficult to secure space between cells to dispose holes for screw attachment. Accordingly, a structure has been adopted with screw holes established only around the perimeter of the battery holder and opposing surfaces of the divided holder bonded together with adhesive.

### CITATION LIST

### PATENT LITERATURE

[Patent Literature 1] Japanese Laid-Open Patent Publication JP 2019-083087

### SUMMARY OF THE INVENTION

### TECHNICAL PROBLEM

However, in split battery holders that hold a large number of rechargeable battery cells and limit screw-attachment to the periphery of the battery holder, reliable attachment and connection of the divided holder pieces is problematic. Particularly in split battery holders that retain a large number of rechargeable battery cells in a space-saving manner, spacing between adjacent rechargeable battery cells is reduced and attachment area of opposing holder piece surfaces is diminished making it difficult to bond the opposing surfaces together with sufficient adhesive strength. Furthermore, configurations that bond opposing holder surfaces together with adhesive have the drawback that bonding strength reduces over time to progressively increase the probability of detachment. Consequently, for a battery holder with a rectangular planar outline that is screw-attached at both ends in the lengthwise direction, insufficient adhesion in the center region can result in detachment at the middle of the battery holder and result in warping or bulging at the center region. In particular, power source apparatus used in electric vehicles and construction equipment are subject to vibration and impact shock, and in this operational environment insufficient adhesion between split holder pieces can result in detachment causing rechargeable battery cell rotation and/or poor electrical contact with the lead plates.

The present disclosure was developed to address the problems described above. Accordingly, one object of the present disclosure is to provide a power source apparatus and method of manufacture thereof that can efficiently house a plurality of rechargeable battery cells in a battery holder while securely bonding the split holder pieces together to reliably retain the rechargeable battery cells.

### SOLUTION TO THE PROBLEM

The power source apparatus for an embodiment of the present disclosure is provided with a plurality of rechargeable battery cells that extend in the lengthwise direction with each cell having side walls that form a circular cylindrical shape, and a battery holder that has a plurality of (cylindrical) sections to hold the plurality of rechargeable battery cells in parallel orientation. The battery holder is divided at the middle in the lengthwise direction of the rechargeable battery cells into a first holder and a second holder that join together at an intervening bonding layer. The first holder is provided with a plurality of first holder cylindrical sections that retain one end of each of the plurality of rechargeable battery cells, a first mating surface formed at the end plane of the plurality of first holder cylindrical sections, and a plurality of side wall extensions established between adjacent rechargeable battery cells in a manner extending along the sides of the battery cells protruding from the first mating surface. Battery cell exposed regions are delineated between adjacent side wall extensions where part of the side surface of each rechargeable battery cell held in a first holder cylindrical section is locally exposed. Filling grooves are formed between rechargeable battery cell side surfaces exposed through the exposed regions and the side wall extensions and adhesive that establishes the bonding layer is filled into those filling grooves. The second holder is provided with a plurality of second holder cylindrical sections that retain the other end of each of the plurality of rechargeable battery cells, a second mating surface formed at the end plane of the plurality of second holder cylindrical sections, and protruding posts disposed opposite filling grooves in the first holder projecting out from the second mating surface at the boundaries between second holder cylindrical sections. When the first and the second holder are joined together, each protruding post is inserted inside a filling groove, but the protruding posts are disposed such that no contact is made with the first mating surface or the side wall extensions. In the assembled power source apparatus, the first and second holders are joined together and the rechargeable battery cells are held in holder cylindrical sections established by the first and second holder cylindrical sections. Tips of the side wall extensions abut against the second mating surface to align the first and second holders, and protruding posts inserted in the filling grooves are embedded in adhesive to bond with the first holder and rechargeable battery cells via the bonding layer thereby adhesively bonding the first and second holders together.

The power source apparatus method of manufacture for an embodiment of the present disclosure is a method of manufacturing a power source apparatus provided with a plurality of rechargeable battery cells having circular cylindrical side walls that extend in the lengthwise direction, and a battery holder that has cell storage space that retains the plurality of rechargeable battery cells in mutually parallel disposition. The method is provided with a preparation step that prepares a first battery holder and second battery holder that make up the battery holder that is divided at the middle in the lengthwise direction of the rechargeable battery cells, a first insertion step, a filling step, a second insertion step, and a bond curing step. In more detail, the preparation step prepares a first holder provided with a plurality of first holder cylindrical sections that retain one end of the plurality of rechargeable battery cells, a first mating surface formed at the end plane of the plurality of first holder cylindrical sections, and a plurality of side wall extensions established between adjacent rechargeable battery cells in a manner extending along the sides of the battery cells protruding from the first mating surface. Exposed regions between adjacent side wall extensions locally expose part of the side walls of the rechargeable battery cells held in first holder cylindrical sections. The preparation step also prepares a second holder provided with a plurality of second holder cylindrical sections that retain the other end of the plurality of rechargeable battery cells, a second mating surface formed at the end plane of the plurality of second holder cylindrical sections, and protruding posts that protrude out from the second mating surface at boundaries between second holder cylindrical sections where valleys are formed between adjacent rechargeable battery cells. When the first and the second holder are joined together, each protruding post is inserted between adjacent side wall extensions in a manner that does not contact with the first mating surface or the side wall extensions. In the first insertion step, one end of each of the plurality of rechargeable battery cells is inserted into each of the plurality of cylindrical sections in the first holder. In the filling step, areas between rechargeable battery cell side surfaces exposed through exposed regions and the plurality of side wall extensions delineate the filling grooves and those filling grooves are filled with adhesive. In the second insertion step, the second holder is joined with the first holder while inserting the other end of each of the plurality of rechargeable battery cells into the each of the plurality of cylindrical sections in the second holder. At that time, second holder protruding posts insert into first holder filling grooves and are embedded in the adhesive in those filling grooves. In the bond curing step, the adhesive is cured to bond protruding posts to the first battery holder and rechargeable battery cells at the bonding layer, and to securely connect the first and second battery holders together. Further, in the second insertion step of the power source apparatus method of manufacture, when protruding posts are inserted into the filling grooves, they apply pressure on the adhesive to push it in a direction out of the filling grooves, and that pushes adhesive against, and bonds it with side surfaces of the rechargeable battery cells and surfaces of the first battery holder.

### ADVANTAGEOUS EFFECTS OF THE INVENTION

The power source apparatus and method of manufacture of the present disclosure has the characteristic that the battery holder can efficiently hold a plurality of rechargeable battery cells while securely bonding the two pieces of the divided holder together to reliably retain those rechargeable battery cells. In addition, the power source apparatus and method of manufacture of the present disclosure has the feature that rotation of the circular cylindrical rechargeable battery cells due to vibration or impact can be effectively prevented to prevent malfunctions caused by cell rotation.

### BRIEF DESCRIPTION OF THE DRAWINGS

FIG. 1 is an oblique view of the power source apparatus for one embodiment of the present disclosure.
FIG. 2 is an exploded oblique view of the power source apparatus shown in FIG. 1.
FIG. 3 is an exploded oblique view of the battery module in the power source apparatus shown in FIG. 2.
FIG. 4 is an exploded oblique view with an enlarged inset of the battery holder shown in FIG. 3.
FIG. 5 is an exploded oblique view with an enlarged inset viewed from below of the battery holder shown in FIG. 4.
FIG. 6 is a horizontal cross section with an enlarged inset through the line VI-VI in the power source apparatus shown in FIG. 1.
FIG. 7 is a vertical cross section through line VII-VII in the power source apparatus shown in FIG. 6.
FIG. 8 is a local region exploded oblique view showing the connecting structure between the first and second holders.
FIG. 9 is an enlarged exploded cross section showing the connecting structure between the first and second holders.
FIG. 10 is an enlarged exploded cross section showing the connecting structure between the first and second holders.
FIG. 11 is an enlarged cross section showing the connecting structure between the first and second holders corresponding to a cross section through line XI-XI in FIG. 6.
FIG. 12 is an enlarged oblique view showing another example of a protruding post.
FIG. 13 is an enlarged bottom view showing another example of a protruding post.
FIG. 14 is an enlarged oblique view showing another example of a protruding post.
FIG. 15 is an oblique view viewed from below showing another example of the second battery holder.

### DESCRIPTION OF THE EMBODIMENTS

The power source apparatus for one embodiment of the present disclosure is provided with a plurality of rechargeable battery cells that extend in the lengthwise direction with each cell having side walls that form a circular cylindrical shape, and a battery holder that has a plurality of (cylindrical) sections to hold the plurality of rechargeable battery cells in parallel orientation. The battery holder is divided at the middle in the lengthwise direction of the rechargeable battery cells into a first holder and a second holder that join together at an intervening bonding layer. The first holder is provided with a plurality of first holder cylindrical sections that retain one end of each of the plurality of rechargeable battery cells, a first mating surface formed at the end plane of the plurality of first holder cylindrical sections, and a plurality of side wall extensions established between adjacent rechargeable battery cells in a manner extending along the sides of the battery cells protruding from the first mating surface. Battery cell exposed regions are delineated between adjacent side wall extensions where part of the side surface of each rechargeable battery cell held in a first holder cylindrical section is locally exposed. Filling grooves are formed between rechargeable battery cell side surfaces exposed through the exposed regions and the side wall extensions, and adhesive that establishes the bonding layer is filled into those filling grooves. The second holder is provided with a plurality of second holder cylindrical sections that retain the other end of each of the plurality of rechargeable battery cells, a second mating surface formed at the end plane of the plurality of second holder cylindrical sections, and protruding posts disposed opposite filling grooves in the first holder projecting out from the second mating surface at the boundaries between second holder cylindrical sections. When the first and the second holder are joined together, each protruding post is inserted inside a filling groove, but the protruding posts are disposed such that no contact is made with the first mating surface or the side wall extensions. In the assembled power source apparatus, the first and second holders are joined together and the rechargeable battery cells are held in holder cylindrical sections established by the first and second holder cylindrical sections. Tips of the side wall extensions abut against the second mating surface to align the first and second holders, and protruding posts inserted in the filling grooves are embedded in adhesive to bond with the first holder and rechargeable battery cells via the bonding layer to adhesively bond the first and second holders together.

The power source apparatus described above has the characteristic that it can reliably retain a plurality of rechargeable battery cells in a battery holder that is divided into a first battery holder and a second battery holder, which are strongly bonded together, while storing the plurality of rechargeable battery cells in an efficient manner. This is because, the first battery holder has a plurality of side wall extensions between adjacent first holder cylindrical sections that protrude from the first mating surface and extend along the sides of the rechargeable battery cells, and cell exposed regions that locally expose part of the rechargeable battery cell side walls between the side wall extensions. Filling grooves are formed in regions surrounded by rechargeable battery cell side walls exposed through cell exposed regions and the side wall extensions, and those grooves are filled with adhesive that forms the bonding layer. Further, the second battery holder has protruding posts that protrude from the second mating surface in boundary regions between second holder cylindrical sections, and those protruding posts are disposed opposite the filling grooves in the first battery holder. When the first battery holder and the second battery holder are connected, protruding posts are inserted in the filling grooves in a manner that does not make contact with the first mating surface or the side wall extensions. Protruding posts inserted in the filling grooves connect with the first battery holder and rechargeable battery cells through adhesive in the bonding layer and that bonds the first and second battery holders together.

Compared to conventional structures where opposing planar surfaces of the divided battery holder are directly connected with adhesive, the configuration described above can make bonding between the first battery holder and the second battery holder stronger by increasing the surface area in contact with the bonding layer. In the power source apparatus of the present disclosure, second battery holder protruding posts are inserted into first battery holder filling grooves. In particular, since the protruding posts are disposed such that no contact is made with the first mating surface or the side wall extensions of the first battery holder, interference between first battery holder side wall extensions and second battery holder protruding posts can be reliably prevented during holder connection. As a result, the protruding posts can be reliably connected to the first battery holder through the bonding layer formed by adhesive in the filling grooves.

In this manner, in a structure where protruding posts are joined to the first battery holder via the bonding layer, the strength of the bond between protruding post side walls and the bonding layer is based on shear strength that acts parallel to the bonding surface rather than delamination strength that acts perpendicularly. As a result, second battery holder protruding posts can be joined to the bonding layer with superior bonding strength, and the bonding strength between the first battery holder and the second battery holder can be enhanced. Further, since adhesive in the filling grooves bonds not only to the first battery holder but also to the side walls of rechargeable battery cells exposed through cell exposed regions, the bonding layer can connect over wider surface area on the first battery holder side, and the first and second battery holders can be connected more robustly. In addition, by bonding filling groove adhesive with rechargeable battery cell side walls exposed through cell exposed regions, rechargeable battery cells housed in holder cylindrical sections can be prevented from rotating inside the cylindrical sections.

In another embodiment of the power source apparatus of the present disclosure, the battery holder can be provided with cell storage space configured to house a plurality of rechargeable battery cells stacked in a "log pile" arrangement.

Since the above configuration provides cell storage space to accommodate a plurality of rechargeable battery cells in a stacked arrangement similar to "log pile," a large number of rechargeable battery cells can be efficiently held in the battery holder and this can realize higher (energy) capacity.

In another embodiment of the power source apparatus of the present disclosure, the first battery holder is provided with filling grooves disposed in triangular regions formed at the boundary of three rechargeable battery cells at vertices of a triangle viewed in plan view, and the second battery holder is provided with protruding posts disposed in triangular regions formed at the boundary of three rechargeable battery cells similarly arranged at vertices of a triangle viewed in plan view.

With this structure, first battery holder filling grooves and second battery holder protruding posts are disposed in triangular regions (triangular spaces in a "log pile" cross section) formed at boundaries between three of the plurality of rechargeable battery cells in a "log pile" arrangement that are adjacent and positioned at vertices of a triangle viewed in plan view. This allows filling grooves and protruding posts to be disposed in a space-saving manner while efficiently storing rechargeable battery cells in a "log pile" stack, and ensures reliable bonding at boundaries of the stacked rechargeable battery cells for secure connection of the first and second battery holders.

In another embodiment of the power source apparatus of the present disclosure, the first battery holder is provided with filling grooves in all the triangular regions formed at boundaries between the plurality of rechargeable battery cells held in first holder cylindrical sections, and the second battery holder is provided with protruding posts in all the triangular regions formed at boundaries between the plurality of rechargeable battery cells held in second holder cylindrical sections.

Since the first battery holder and the second battery holder are provided with filling grooves and protruding posts in all the triangular regions formed at boundaries between the plurality of rechargeable battery cells, the first and second battery holders can be joined and firmly bonded together more reliably. Further, since protruding posts are inserted into all the filling grooves in the first battery holder, the amount of adhesive filled into each filling groove can be reduced to lower manufacturing costs.

In another embodiment of the power source apparatus of the present disclosure, the first battery holder is provided with filling grooves in all the triangular regions formed at boundaries between the plurality of rechargeable battery cells held in first holder cylindrical sections, and the second battery holder is provided with protruding posts in selected triangular regions formed at boundaries between the plurality of rechargeable battery cells held in second holder cylindrical sections such that each rechargeable battery cell is adjacent to at least one protruding post.

In this configuration, the first battery holder is provided with filling grooves in all the triangular regions formed at boundaries between the plurality of rechargeable battery cells, and the second battery holder is provided with protruding posts in triangular regions selected such that each rechargeable battery cell is adjacent to at least one protruding post. This has the characteristic that while the number of protruding posts can be reduced, all the rechargeable battery cells can be stably held in the first and second battery holders securely connected through the bonding layer formed around protruding posts adjacent to each rechargeable battery cell.

In another embodiment of the power source apparatus of the present disclosure, the battery holder has a rectangular shape in plan view extending in one direction, and the first battery holder and the second battery holder are screw connected with fastening screws at both lengthwise ends of the battery holder and are bonded together via protruding posts and the bonding layer at least in the center region in the lengthwise direction of the battery holder.

In another embodiment of the power source apparatus of the present disclosure, the bonding layer is joined not only to the protruding posts but also to the second mating surface of the second battery holder. With this configuration, surface area for contact between the bonding layer and the second battery holder is increased for more effective bonding.

In another embodiment of the power source apparatus of the present disclosure, the protruding posts have a circular cylindrical or polygonal cylindrical (prismatic) shape. Further, in another embodiment of the power source apparatus of the present disclosure, the protruding posts are shaped with ridges or grooves that extend in the lengthwise direction on cylindrical side surfaces. These types of structures increase the surface area of the protruding posts to enhance bonding strength between the protruding posts and the bonding layer.

In another embodiment of the power source apparatus of the present disclosure, the protruding posts have a conical frustum (truncated cone) or frustum of a polygonal cone (truncated polygonal cone) shape that narrows in cross sectional area towards the tip. This structure has the characteristic that protruding posts can be inserted into the filling grooves and embedded in adhesive with little initial resistance due to small cross-sectional area near the tips. As insertion continues, larger cross sectional area at the aft ends of the protruding posts gradually increases pressure on adhesive in the filling grooves to push it outward from the protruding posts.

The power source apparatus method of manufacture for one embodiment of the present disclosure is a method of manufacturing a power source apparatus provided with a plurality of rechargeable battery cells having circular cylindrical side walls that extend in the lengthwise direction, and a battery holder that has cell storage space that retains the plurality of rechargeable battery cells in mutually parallel disposition. The battery holder is divided in the middle in the lengthwise direction of the rechargeable battery cells into a first battery holder and a second battery holder. The method includes a preparation step that prepares the first battery holder and the second battery holder. The first battery holder is provided with a plurality of first holder cylindrical sections each configured to store one end of a rechargeable battery cell, a first mating surface established at the interconnected end plane of the plurality of first holder cylindrical sections, and a plurality of side wall extensions formed between adjacent rechargeable battery cells protruding from the first mating surface and extending along the side walls of the rechargeable battery cells. Cell exposed regions are delineated between the side wall extensions where part of the side wall of each rechargeable battery cell stored in a first holder cylindrical section is locally exposed. The second battery holder is provided with a plurality of second holder cylindrical sections each configured to store the other end of a rechargeable battery cell, a second mating surface established at the interconnected end plane of the plurality of second holder cylindrical sections, and a plurality of protruding posts formed protruding from the second mating surface in boundary regions that are valleys between adjacent rechargeable battery cells in second holder cylindrical sections. The protruding posts are disposed such that when the first and second battery holders are connected, the protruding posts are inserted between a plurality of side wall extensions while in a non-contact state with the first mating surface and the side wall extensions. The method includes a first insertion step where one end of each of the plurality of rechargeable battery cells is inserted into the plurality of first battery holder cylindrical sections, a filling step where filling grooves surrounded by rechargeable battery cell side walls exposed through cell exposed regions and the side wall extensions are filled with uncured adhesive, a second insertion step where the second battery holder is connected to the first battery holder while inserting the other end of each of the rechargeable battery cells into the plurality of second holder cylindrical sections while simultaneously inserting second battery holder protruding posts into first battery holder filling grooves to embed the protruding posts in adhesive in the filling grooves, and a bond curing step where the adhesive is cured to bond the protruding posts to the first battery holder and the rechargeable battery cells via adhesive in the bonding layer to bond the first battery holder and the second battery holder together. In the second insertion step, each protruding post inserted in a filling groove applies pressure on adhesive in the filling groove to force it in an outward direction, and this presses adhesive against rechargeable battery cell side walls and first battery holder surfaces for bond connection.

In the second insertion step that connects the first battery holder and the second battery holder in the method of manufacture described above, adhesive in the filling grooves is pressed by the protruding posts pushing it in a direction outward from the filling grooves. By pressing and bonding adhesive to rechargeable battery cell side walls and to surfaces of the first battery holder, the bonding layer can bond more robustly with the first battery holder and the rechargeable battery cells to increase the bonding strength between the first and second battery holders.

In another embodiment of the power source apparatus method of manufacture of the present disclosure, the amount of adhesive used in the filling step is set such that some of the adhesive pushed outward by the protruding posts in the second insertion step reaches the second mating surface of the second battery holder, and in the bond curing step, the bonding layer is bonded to the second mating surface.

Accordingly, since the amount of adhesive used in the filling step is set so that some of the adhesive pushed outward by the protruding posts in the second insertion step reaches the second mating surface of the second battery holder, the bonding layer is bonded to the second mating surface in the bond curing step, and that has the characteristic that the first battery holder and the second battery holder are more firmly attached together.

In another embodiment of the power source apparatus method of manufacture of the present disclosure, some of the adhesive pushed outward by the protruding posts in the second insertion step is pressed into gaps between the rechargeable battery cells and cell storage space walls.

According to the method described above, since some of the adhesive pushed outward by protruding posts inserted into filling grooves in the second insertion step is pressed in between rechargeable battery cells and cell storage space walls, side walls of the rechargeable battery cells bond with inside surfaces of the cell storage space over a wide area to enable stronger holder connection and more effective prevention of rechargeable battery cell rotation.

The following describes embodiments of the present disclosure in detail with reference to the figures (drawings). However, embodiments described below are merely examples intended to illustrate technical concepts of the present disclosure and the present disclosure is not limited to those examples. Further, components cited in the claims are in no way limited to the components in the embodiments. Unless specifically stated otherwise, dimensions, materials, shapes, relative disposition, and other aspects of the components described below are merely illustrative and are not intended to limit the scope of the disclosure. Note that the size, positional relationships, and other characteristics of components shown in the drawings may be exaggerated for the purpose of clear explanation. Moreover, identical names and reference numbers in the following descriptions indicate identical or similar components, and their detailed explanations may be omitted as appropriate. Furthermore, elements of the present disclosure may be configured such that a plurality of elements combine to form a single component that serves a plurality of functions, and conversely, a plurality of elements can implement a single function.

The power source apparatus of the present disclosure can be used, for example, in construction machinery; as the driving power source in hybrid and electric vehicles, electric scooters (e.g. home delivery scooters), electric carts used at golf courses, factories, and airports; as the power source in self-propelled delivery robots; and as the power source in electric assist bicycles. It can also be used as the power source in portable electric equipment such as wireless communication devices, electric vacuum cleaners, and electric hand tools. Alternatively, it can be used as a stationary power storage device for computer server backup power, or as a power source used in the household, office, and factory. The following describes a power source apparatus used as the driving power source in a construction machine as one embodiment of the present disclosure.

### [Embodiment 1]

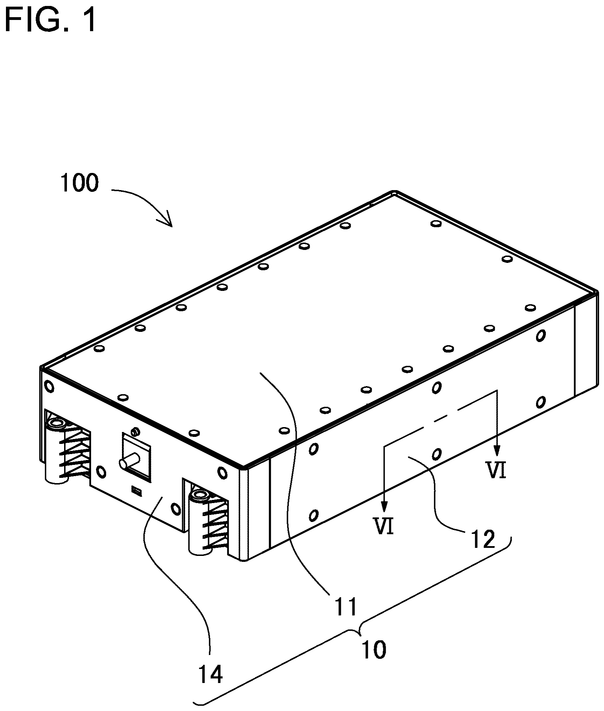

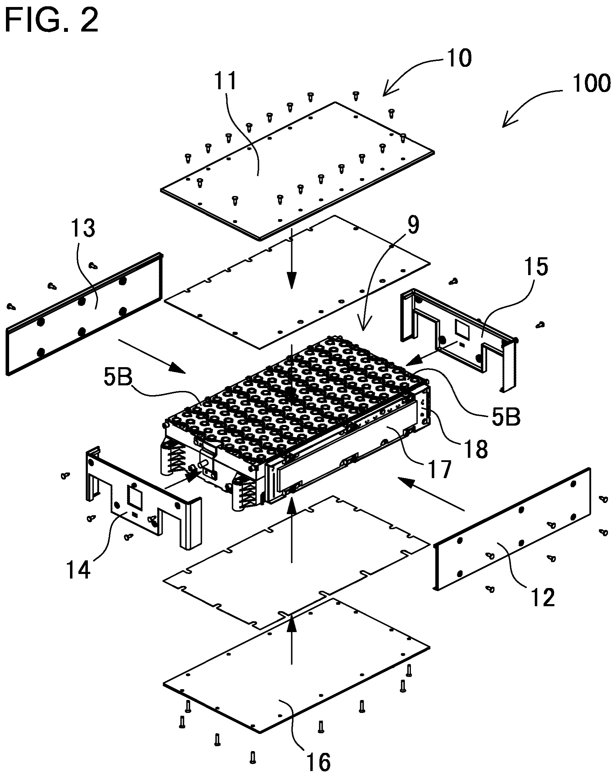

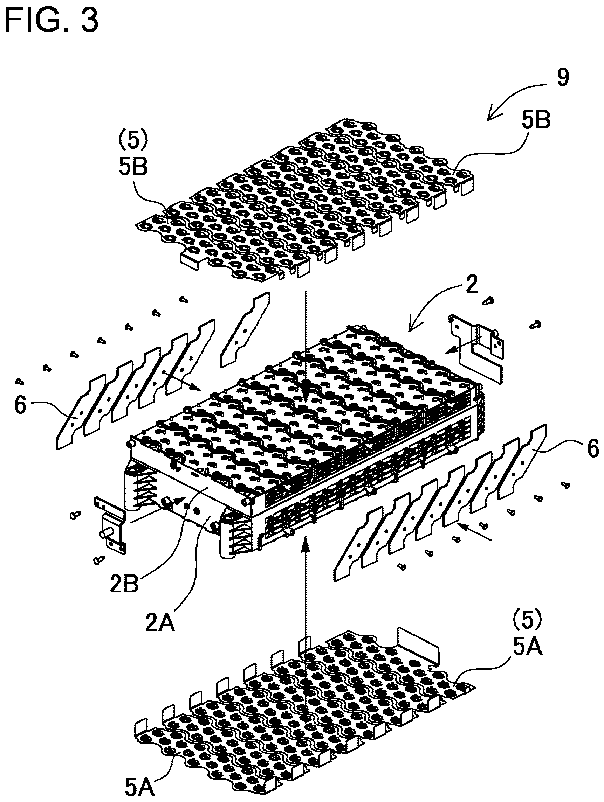

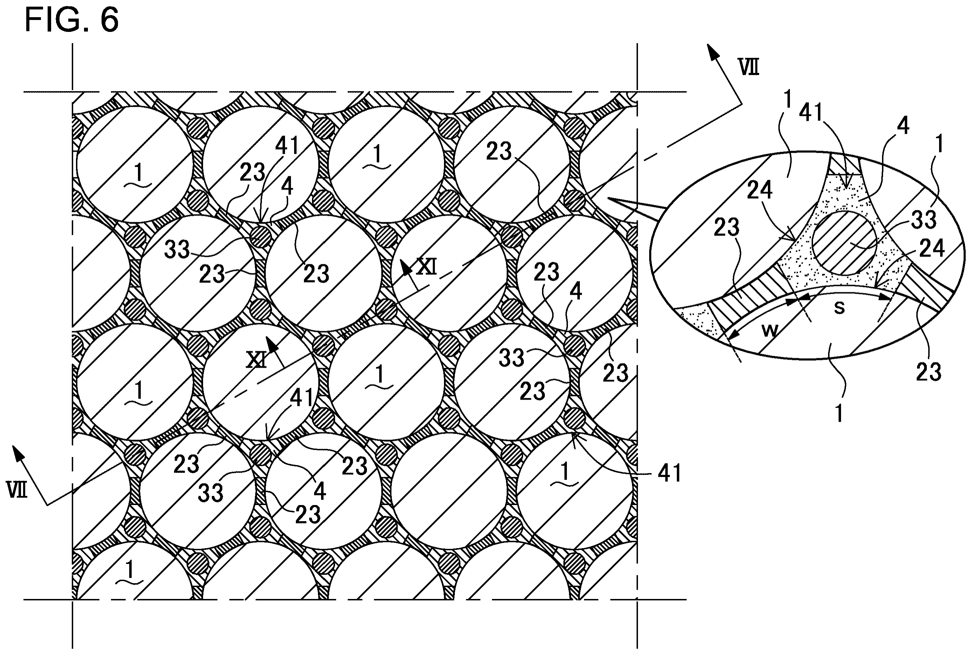

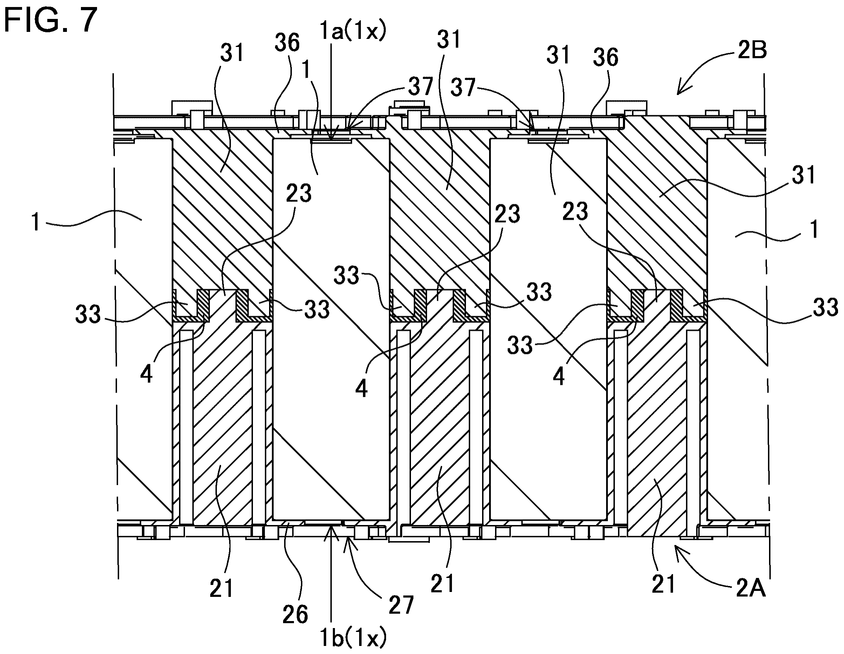

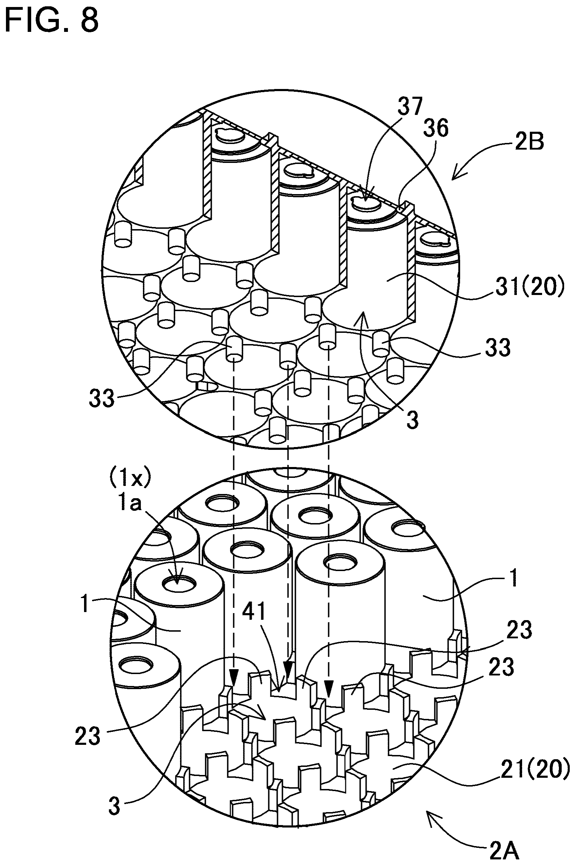

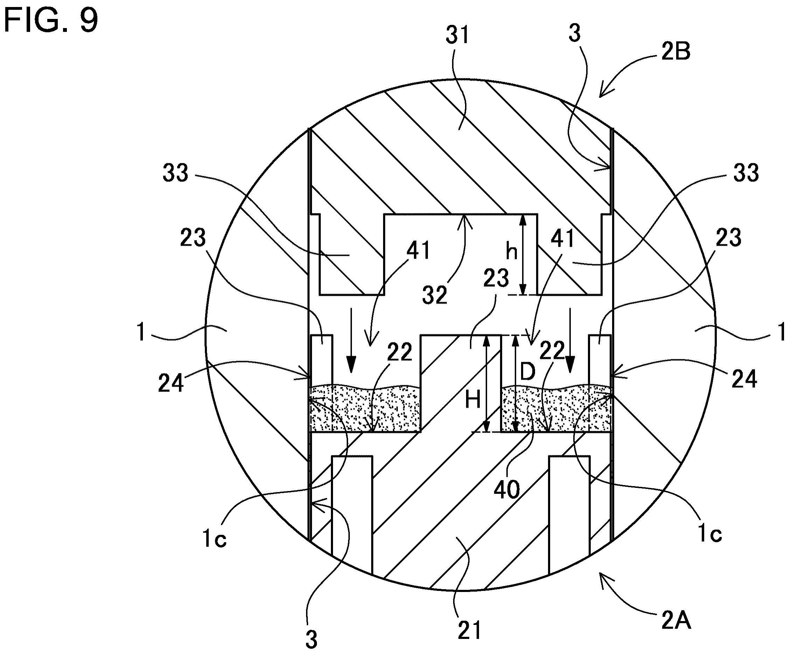

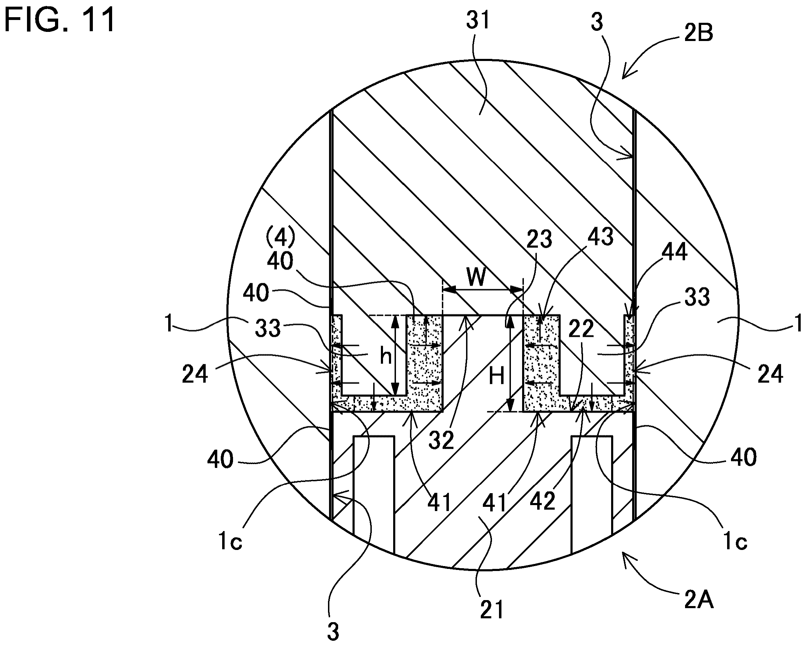

FIGS. 1-11 show the power source apparatus 100 for embodiment 1 of the present disclosure. In these figures, FIG. 1 is an oblique view of the power source apparatus, FIG. 2 is an exploded oblique view of the power source apparatus in FIG. 1, FIG. 3 is an exploded oblique view of the battery module in the power source apparatus shown in FIG. 2, FIG. 4 and FIG. 5 are an exploded oblique view and an exploded oblique view viewed from below of the battery holder shown in FIG. 3, FIG. 6 is an enlarged horizontal cross section through the line VI-VI in the power source apparatus shown in FIG. 1, FIG. 7 is a vertical cross section through line VII-VII in the power source apparatus shown in FIG. 6, FIG. 8 is an exploded oblique view showing the connecting structure between the first and second holders, and FIGS. 9-11 are exploded cross sections and an enlarged cross section showing the connecting structure between the first and second holders.

The power source apparatus 100 shown in these figures is provided with a plurality of rechargeable battery cells 1 and a battery holder 2 that has cell storage space 3 to hold the plurality of rechargeable battery cells 1 in parallel orientation. The battery holder 2 is divided at the middle in the lengthwise direction of the rechargeable battery cells 1 into a first battery holder 2A and a second battery holder 2B that are joined together at an intervening bonding layer 4. In addition, the power source apparatus 100 shown in the figures has a plurality of lead plates 5 disposed on both surfaces (upper and lower surfaces in the figures) of the battery holder 2 that connect the plurality of rechargeable battery cells 1 in a given configuration to form a battery module 9. The battery module 9 and a circuit board 17 are housed in an outer case 10.

The power source apparatus 100 of the present disclosure is characterized in that the battery holder 2 that houses a plurality of rechargeable battery cells 1 is divided into a first battery holder 2A and a second battery holder 2B, which are bonded together at an intervening bonding layer 4. Accordingly, other than the connecting structure between the first battery holder 2A and the second battery holder 2B, the power source apparatus 100 of the present disclosure can be configured according to any existing structure or structure developed in the future. The following describes in detail the connecting structure that joins the first battery holder 2A and the second battery holder 2B at the bonding layer 4.

### (Rechargeable Battery Cells 1)

Each rechargeable battery cell 1 is a circular cylindrical rechargeable battery, which has an exterior container with a circular cylindrical outline. One example of a circular cylindrical rechargeable battery cell 1 has an electrode assembly inserted in a metal cylindrical exterior can that is filled with electrolyte and hermetically sealed with a sealing plate to close off the open end of the can. Positive and negative electrodes 1x are established at both ends in the lengthwise direction of the circular cylindrical rechargeable battery cell 1. The bottom end plane of the cylindrical can and the center electrode disposed in the center of the sealing plate serve as the negative and positive electrodes. In the rechargeable battery cells 1 in the figures, one of the end plane electrodes 1x is designated as the first electrode 1a, which is disposed at the center of the sealing plate, and the other end plane electrode at the bottom of the cylindrical can is designated as the second electrode 1b.

This type of Rechargeable battery cell 1 can be a high energy efficient non-aqueous electrolyte rechargeable battery and, for example, lithium-ion rechargeable batteries can be used with good results. However, the power source apparatus of the present disclosure is not limited to lithium-ion rechargeable batteries. Any type of batteries that can be recharged such as nickel-metal hydride batteries and nickel-cadmium batteries can be used as the rechargeable battery cells.

### (Battery Holder 2)

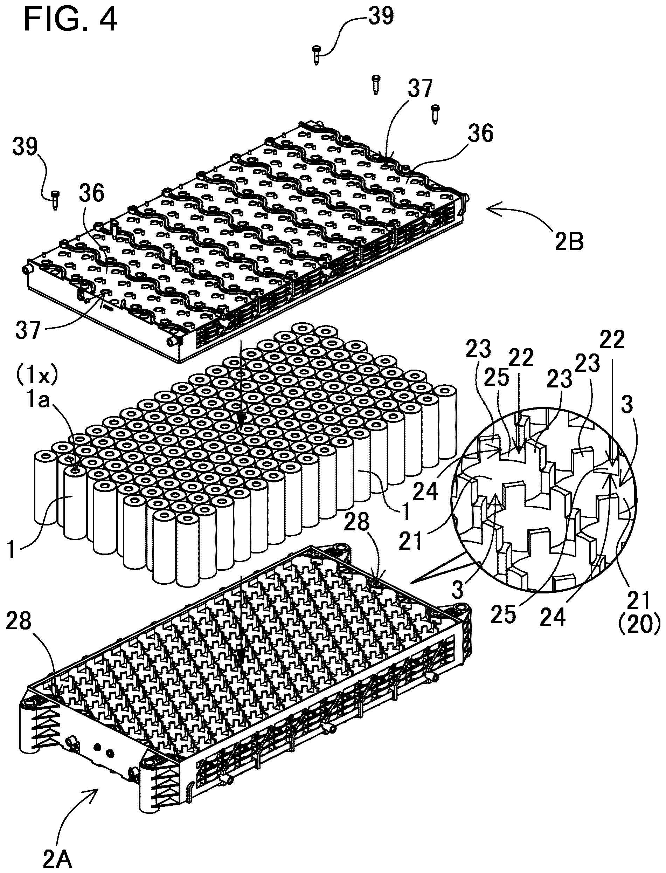

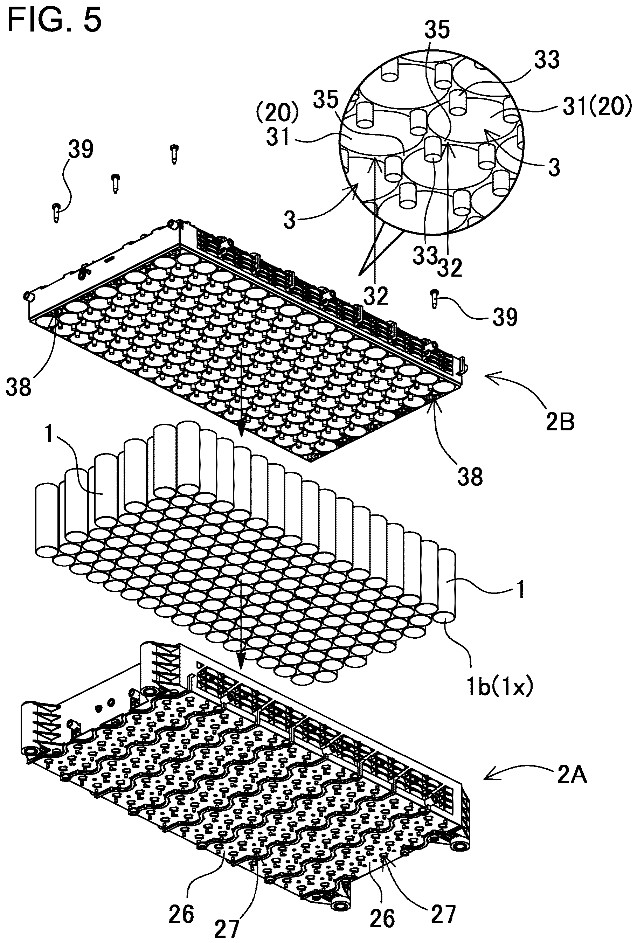

The battery holder 2 is provided with a plurality of holder cylindrical sections 20 that house each of the rechargeable battery cells 1 and cover the cell side walls 1c. The interior of each holder cylindrical section 20 serves as cell storage space 3. The battery holder 2 shown in FIGS. 4 and 5 holds a plurality of rechargeable battery cells 1 in a parallel orientation with the two end plane electrodes 1x aligned in respective planes. The battery holder 2 in the figures has a box shaped outline with the plurality of rechargeable battery cells 1 disposed in multiple rows and columns. The battery holder 2 is made of resin molded in a shape that establishes cylindrical sections 20 in multiple rows and columns to hold the rechargeable battery cells 1 in multiple rows and columns. Preferably, the battery holder 2 is made of material with superior insulating and heat resistant properties such as polycarbonate or ABS (Acrylonitrile Butadiene Styrene) resin.

The battery holder 2 shown in FIGS. 4-6 is provided with cell storage space 3 that holds the plurality of rechargeable battery cells 1 in a "log pile" cross section as viewed in a plan view. In this "log pile" configuration, gaps (valleys) between adjacent rechargeable battery cells 1 in one row are filled by the (peaks of) battery cells 1 in an adjacent row to implement space-efficient storage. Accordingly, by adopting this "log pile" arrangement, the battery holder 2 can efficiently house a large number of rechargeable battery cells 1 and realize high (energy) capacity.

The battery holder 2 in the figures holds 160 rechargeable battery cells 1 with 16 cells in each laterally extending row and 10 rows stacked fore and aft. The 16 rechargeable battery cells in each row are laterally offset to position the circular side surface (peak) of the rechargeable battery cell 1 in one row in the gap (valley) between adjacent cells in the neighboring row and establish a "log pile" arrangement in the fore and aft direction. However, the present invention does not limit the number or arrangement of rechargeable battery cells 1 housed in the battery holder 2 to that described above. In the power source apparatus of the present disclosure, the number and arrangement of rechargeable battery cells can be adjusted according to the intended application.

The battery holder 2 in the figures is divided into the first battery holder 2A and the second battery holder 2B at the midpoint in the lengthwise direction of the rechargeable battery cells 1 and joined together at the intervening bonding layer 4.

### (First Battery Holder 2A)

The first battery holder 2A is provided with a plurality of first holder cylindrical sections 21 that hold one end of each of the plurality of rechargeable battery cells 1, a first mating surface 22 formed by the interconnected surface at the end plane of the plurality of first holder cylindrical sections 21, and a plurality of side wall extensions 23 established between adjacent rechargeable battery cells 1 in a manner protruding from the first mating surface 22 and extending along the side walls 1c of the rechargeable battery cells 1. Battery cell exposed regions 24 are created between each pair of adjacent side wall extensions 23 where part of the side wall 1c of each rechargeable battery cell 1 held in a first holder cylindrical section 21 is locally exposed. The first battery holder 2A in FIGS. 4 and 5 is formed by integrally molding a plurality of parallel interconnected first holder cylindrical sections 21 with an end plane plate 26 at one end.

### (Side Wall Extensions 23)

The side wall extensions 23 have the form of ribs that project out from the first mating surface 22 of the first battery holder 2A. Side wall extensions 23 are disposed between adjacent rechargeable battery cells 1 and are integrally molded with first holder cylindrical sections 21 in a manner extending out from the cylindrical sections 21. Side wall extension 23 thickness is essentially the same as the walls of the first holder cylindrical sections 21 and is equivalent to the spacing between adjacent rechargeable battery cells 1. Further, as shown in FIG. 4, side wall extensions 23 curve around the cylindrical sections 21 with concavity that mates with the outside surfaces of the rechargeable battery cells 1 to stably support of the cells. Side wall extensions 23 disposed between adjacent rechargeable battery cells 1 serve to suppress thermal conduction between cells.

### (Cell Exposed Regions 24)

As shown in FIGS. 4-11, cell exposed regions 24 are established between adjacent side wall extensions 23 in the first battery holder 2A and those cell exposed regions 24 locally expose part of the side wall 1c of each rechargeable battery cell 1 held in a first holder cylindrical section 21. Cell exposed regions 24 in FIG. 8 are established between side edges of adjacent side wall extensions 23 and edges of first holder cylindrical section 21 openings. Each exposed region 24 has a rectangular shape that curves to conform with the side wall of a rechargeable battery cell. In the first battery holder 2A shown in the figures, side wall extensions 23 are integrally formed with first holder cylindrical sections 21 protruding out from the first mating surface 22, which is the end plane of the first holder cylindrical sections 21. The protruding side wall extensions 23 extend in the lengthwise direction of the rechargeable battery cells 1. The first mating surface 22 is exposed between each pair of adjacent side wall extensions 23 and this area is designated as cell exposed region 24 where part of the rechargeable battery cell 1 side wall 1c is locally exposed.

### (Filling Grooves 41)

As shown in FIGS. 6-11 and as described above, the first battery holder 2A has filling grooves 41 formed in regions surrounded by rechargeable battery cell 1 side walls 1c exposed through cell exposed regions 24 and multiple side wall extensions 23. Adhesive 40 that forms the bonding layer 4 is filled into the filling grooves 41. First battery holder 2A structure that establishes cell exposed regions 24 between adjacent side wall extensions 23 allows adhesive 40 in the filling grooves 41 to bond with side walls 1c of the rechargeable battery cells 1 exposed through the cell exposed regions 24. This attaches the bonding layer 4 to the rechargeable battery cell 1 side walls 1c and has the characteristic that rechargeable battery cell 1 rotation can be prevented.

As shown in FIGS. 4-6, the first battery holder 2A holds rechargeable battery cells 1 in a plurality of first holder cylindrical sections 21 arrayed in a "log pile" configuration. When the first battery holder 2A is viewed in plan view, the common boundary between three adjacent rechargeable battery cells 1 disposed at the vertices of a triangle takes the form of a triangular region 25 where a filling groove 41 is established. Since this configuration disposes filling grooves 41 in the triangular regions 25 located at common boundaries between rechargeable battery cells 1 held in a "log pile" arrangement, filling grooves 41 can be disposed in a space saving manner while efficiently holding a large number of rechargeable battery cells 1 in a "log pile" arrangement. (Triangular region 25 filling grooves 41 correspond to spaces in the "log pile" cross section.)

As shown in FIGS. 4-6, the first battery holder 2A has filling grooves 41 established in all the triangular regions 25 at boundaries between each of the plurality of rechargeable battery cells 1 held in first holder cylindrical sections 21. In this structure, adhesive 40 in the filling grooves 41 bonds with the side walls 1c of rechargeable battery cells 1 exposed through cell exposed regions 24. Rechargeable battery cells 1 that are bonded with the bonding layer 4 are prevented from rotating inside the cell storage space 3. Since the first battery holder 2A shown in the figures has filling grooves 41 in all of the triangular regions 25, it has the characteristic that the bonding layer 4 is joined with all the rechargeable battery cells 1 held in the battery holder to effectively prevent any of them from rotating.

As described above, the first battery holder 2A is provided with a plurality of side wall extensions 23 on the first mating surface 22, and cell exposed regions 24, which locally expose part of the side wall 1c of each rechargeable battery cell 1 housed in a first holder cylindrical section 21, are formed between adjacent side wall extensions 23. By bonding parts of the rechargeable battery cells 1 that are exposed through cell exposed regions 24 to the first battery holder 2A at the bonding layer 4, cylindrical rechargeable battery cells 1 held in the cell storage space 3 are prevented from rotating inside the holder cylindrical sections 20.

In the first battery holder 2A described above, increasing the protrusion height (H) of the side wall extensions 23 increases the depth (D) of the filling grooves 41 where the bonding layer 4 is formed and increases bonding area between the subsequently described protruding posts 33 and the bonding layer 4 to increase bonding strength. Further, by increasing the area of the cell exposed regions 24 formed between adjacent side wall extensions 23, bonding with the rechargeable battery cells 1 can be strengthened. Conversely, if the protrusion height (H) of the side wall extensions 23 is decreased, the depth (D) of the filling grooves 41 that form the bonding layer 4 decreases and the amount of adhesive 40 necessary to fill the filling grooves 41 can be reduced to lower manufacturing cost. Accordingly, considering these factors and mold release constraints during resin molding, filling groove 41 depth (D) and side wall extension 23 protrusion height (H) can be set within a range from 2 mm to 10 mm and preferably from 4 mm to 6 mm. In addition, filling groove 41 depth (D) and side wall extension 23 protrusion height (H) are set to result in a bonding surface area that provides sufficient adhesive strength for vibration test requirements. Adhesive 40 bonding surface area set by the filling grooves 41 and side wall extensions 23 is determined based on the required bonding strength. For example, minimum adhesive 40 bonding surface area is made greater than or equal to 50 mm².

If side wall extension 23 width (W) is increased, heat conduction between adjacent rechargeable battery cells 1 can be effectively suppressed. However, this narrows the width (S) of the cell exposed regions 24 and reduces bonding area between the bonding layer 4 and the rechargeable battery cells 1. Conversely, If side wall extension 23 width (W) is decreased, cell exposed region 24 width (S) increases and the bonding area between the bonding layer 4 and the rechargeable battery cells 1 increases, but this decreases the effectiveness of heat conduction suppression between adjacent rechargeable battery cells. Accordingly, side wall extension 23 width (W) and cell exposed region 24 width (S) are set considering these trade-offs. In the first battery holder 2A shown in FIG. 6, the ratio W:S of side wall extension 23 width (W) to cell exposed region 24 width (S) is approximately 2:3. However, in the first battery holder 2A, the value of the ratio (W/S) of the side wall extension width (W) to the cell exposed region width (S) can be set within a range from 1/4 to 3 and preferably from 2/5 to 2.

The first battery holder 2A shown in FIG. 6 holds rechargeable battery cells 1 in a "log pile" arrangement, and each rechargeable battery cell 1 has six side wall extensions 23 disposed at equal intervals around the cell perimeter (circumference). Here, the ratio of the width (W) of the side wall extensions 23 to the width (S) of the cell exposed regions 24 is approximately 2:3. This makes the width (W) of the side wall extensions 23 approximately 1/15 of the circumference of the rechargeable battery cell 1 and the cell exposed region 24 width (S) approximately 1/10 of the circumference of the rechargeable battery cell 1. Accordingly, for a first battery holder 2A that holds rechargeable battery cells 1 in a "log pile" configuration, side wall extension 23 width (W) can be set in a range from 1/30 to 1/8 of the rechargeable battery cell 1 circumference, and the cell exposed region 24 width (S) can be set in a range of approximately 1/24 to 2/15 of the rechargeable battery cell 1 circumference.

### (Second Battery Holder 2B)

The second battery holder 2B is provided with a plurality of second holder cylindrical sections 31 that retain the other end of each of the plurality of rechargeable battery cells 1, a second mating surface 32 formed by the interconnected surface at the end plane of the plurality of second holder cylindrical sections 31, and protruding posts 33 that protrude from the second mating surface 32 at boundaries between a plurality of adjacent second holder cylindrical sections 31 opposite filling grooves 41 in the first battery holder 2A. The second battery holder 2B in FIG. 5 is configured with a plurality of separate parallel interconnected second holder cylindrical sections 31 integrally molded with an end plane plate 36 at one end.

### (Protruding Posts 33)

As shown in FIGS. 5 and 8, protruding posts 33 are integrally formed with the second battery holder 2B as pillars that project out from the second mating surface 32. The protruding posts 33 are designed to be inserted into the filling grooves 41 in the first battery holder 2A when the first and second battery holders 2A, 2B are joined together. Protruding posts 33 inserted in the filling grooves 41 are embedded in adhesive 40 that occupies the filling grooves 41. The protruding posts 33 apply pressure on adhesive 40 in the filling grooves 41 in a direction that pushes the adhesive 40 out of the grooves. This presses adhesive 40 against the side walls 1c of the rechargeable battery cells 1 and the surface of the first battery holder 2A for bonding.

Further, as shown in FIGS. 9-11, although protruding posts 33 inserted in the filling grooves 41 are embedded in adhesive 40 inside the grooves, the tip of each protruding post 33 is disposed such that it does not make contact with the bottom of the filling groove 41, which is the first mating surface 22 of the first battery holder 2A. Specifically, the height (h) of the protruding post 33 is made smaller than the depth (D) of the filling groove. In addition, as shown in FIGS. 6 and 9-11, side surfaces of the protruding posts 33 are configured such that no contact is made with the side surfaces of the side wall extensions 23, which serve as the inside walls of the filling grooves 41. Namely, while the protruding posts 33 insert into the filling grooves 41, they are disposed such that no contact is made with either the first mating surface 22 or the side wall extensions 23. In this manner, a bonding gap 42 is formed between the tip of each protruding post 33 and the first mating surface 22, and bonding is achieved via the adhesive 40 that fills this bonding gap 42. Further, bonding gaps 43 are formed between side surfaces of the protruding posts 33 and the side wall extensions 23, and bonding is also achieved via adhesive 40 that fills those bonding gaps 43. Still further, protruding posts 33 inserted in the filling grooves 41 are preferably designed such that no contact is made with the side walls 1c of rechargeable battery cells 1 exposed through cell exposed regions 24. Accordingly, bonding gaps 44 are formed between side surfaces of the protruding posts 33 and the rechargeable battery cells 1, and solid bonding is achieved via the adhesive 40 in those bonding gaps 44.

As described above, protruding posts 33 embedded in adhesive 40 filled filling grooves 41 have the characteristic that adhesion with the bonding layer 4 is established over more surface area than in a conventional structure where opposing planar mating surfaces are directly joined together. This is because side surfaces of the protruding posts 33 embedded in the bonding layer 4 adhere closely with the bonding layer 4. In particular, a structure where the bonding layer 4 is formed with adhesive in close contact with the sides of the protruding posts 33 has the characteristic that adhesive strength between the bonding layer 4 and the protruding posts 33 is due to shear strength, which is more robust than delamination strength that acts in conventional bonding between opposing planar mating surfaces. Further, since protruding posts 33 inserted into the filling grooves 41 press into the adhesive 40, adhesive 40 in the bonding gaps 42 is pressed into and bonded with the first mating surface 22. This has the characteristic that the surface at the tip of each protruding post 33 bonds to the first mating surface 22 with high delamination strength. In addition, protruding posts 33 that press into the adhesive 40 also press adhesive 40 in bonding gaps 43 with the side wall extensions 23 and in bonding gaps 44 with the side walls 1c of the rechargeable battery cells 1 for pressure bonding with those surfaces. Accordingly, the bonding layer 4 can be strongly bonded to the first battery holder 2A and the rechargeable battery cells 1 to increase bonding strength between the first battery holder 2A and the second battery holder 2B. Here, considering the strength of the protruding posts 33, protruding post 33 minimum surface area is set, for example, greater than or equal to 15 mm². Protruding post 33 height (h) is set based on filling groove 41 depth (D) and the width of the bonding gap 42 between the tip of the protruding post 33 and the first mating surface 22 is set, for example, from 0.5 mm to 1 mm.

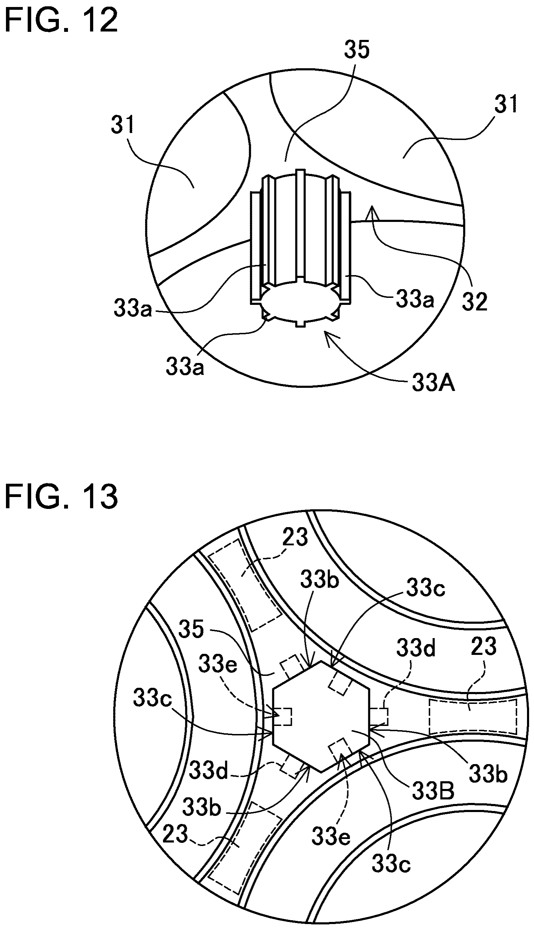

While protruding posts 33 embedded in adhesive 40 in the filling grooves 41 can have smooth surfaces as shown in FIGS. 5 and 8, changing surface shape or conditions at the tip and sides of the protruding posts 33 can result in even stronger bonding with the bonding layer 4. The protruding post 33A shown in FIG. 12 has ridges (ribs) 33a formed in a plurality of rows that extend in the lengthwise direction on the cylindrical side surface. Although not illustrated, a plurality of rows of grooves can also be formed extending in the lengthwise direction on the cylindrical side surface. In this way, ridges 33a or grooves formed on the side surface of the pillar shaped protruding post 33A increases its overall surface area and enhances bonding strength with the bonding layer 4. Although the surface of the tip of the protruding post 33A is shown as a smooth surface in FIG. 12, it can also be an uneven nonplanar surface. For example, a plurality of rows of ridges or grooves can be provided on the tip of the protruding post.

Further, the protruding posts can also be polygonal cylinders (prisms) with a polygonal cross-section. A polygonal cylindrical protruding post has the characteristic that its surface area is greater than that of a corresponding circular cylindrical protruding post. The protruding post 33B shown in the bottom view of FIG. 13 is a polygonal cylinder with a hexagonal cross-section. Of the six sides of the hexagonal cross-section shown in FIG. 13, three sides 33b are disposed facing side wall extensions 23 and the remaining interposed three sides 33c face rechargeable battery cells 1. This configuration allows the protruding post 33B to efficiently utilize the area available in the triangular region 35 of the second battery holder 2B, while also allowing it to be inserted without excessive force into a first battery holder 2A filling groove 41. Further, as shown by the broken lines in FIG. 13, the hexagonal cross-section protruding post can also be provided with ridges 33d or grooves (not illustrated) on the sides 33b that face the side wall extensions 23, and the protruding post can be provided with grooves 33e on the sides 33c that face the rechargeable battery cells 1. This structure can further increase protruding post surface area and enhance bonding strength with the bonding layer 4.

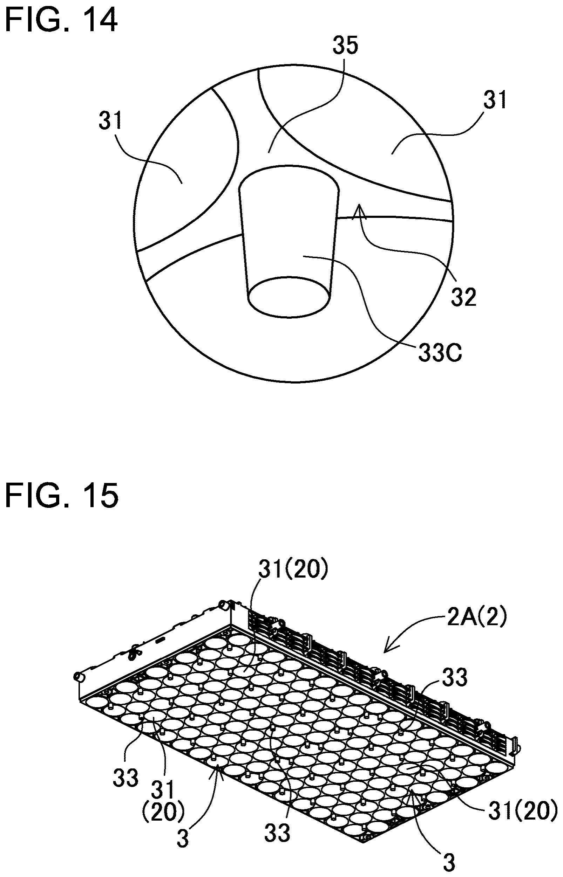

In addition, as shown in FIG. 14, the protruding post 33C can be shaped as a conical frustum (truncated cone) that narrows in cross sectional area towards the tip. Since a protruding post 33C with this shape has a smaller cross sectional area at the tip, it can be inserted into a filling groove 41 with little initial resistance. As insertion continues, larger cross sectional area at the aft end of the protruding post 33C gradually increases pressure in directions outward from the protruding post. Although not illustrated, the protruding post can also be formed as the frustum of a polygonal cone (truncated polygonal cone) that narrows in cross sectional area towards the tip. In addition, even for the case of a protruding post that gradually narrows in cross sectional area towards the tip, surface area can be increased by establishing ridges or grooves on the side surfaces.

As described above, when the first battery holder 2A and the second battery holder 2B are connected together with the tips of the protruding posts 33 in a non-contact state with respect to the first mating surface 22, first battery holder 2A side wall extension 23 tips make contact with the second mating surface 32 of the second battery holder 2B and align the battery holder assembly. Said differently, when first battery holder 2A side wall extensions 23 butt against the second mating surface 32 of the second battery holder 2B and align the assembly, second battery holder 2B protruding posts 33 are configured such that they do not contact the first mating surface 22 of the first battery holder 2A. With this structure, the second battery holder 2B can be joined with the first battery holder 2A while aligning the mating surfaces by butting the ends of side wall extensions 23, which surround each of the plurality of rechargeable battery cells 1, against the second mating surface 32. If protruding posts 33 were instead designed to simultaneously butt against the first mating surface 22 of the first battery holder 2A, alignment during connection of the first and second battery holders would be required on two different reference surfaces, and due to molding tolerances, there would be risk of misalignment. In contrast, with the structure of the present disclosure where protruding posts 33 are in a non-contact state with respect to the first mating surface 22, first battery holder 2A and second battery holder 2B mating surfaces can be accurately positioned via the ends of the side wall extensions 23 and the second mating surface 32. Furthermore, by forming bonding gaps 42 between the ends of the protruding posts 33 and the first mating surface 22, adhesive 40 residing in the bonding gaps can create reliable bonding and strong battery holder attachment.

Here, the amount of adhesive 40 in the filling grooves 41 is preferably adjusted such that when protruding posts 33 are inserted in the filling grooves 41 and the ends of first battery holder 2A side wall extensions 23 butt against the second mating surface 32 of the second battery holder 2B, adhesive 40 in the filling grooves 41 is pushed upward due to protruding post 33 insertion and the upper surface of the adhesive 40 coincides with the second mating surface 32 of the second battery holder 2B. Specifically, the amount of adhesive 40 filled into the filling grooves 41 prior to protruding post 33 insertion is preferably equal to or slightly greater than the volume of the filling grooves 41 minus the volume of the protruding posts 33. In this way, when protruding posts 33 are inserted into adhesive 40 filled filling grooves 41, the upper surface of the adhesive 40 contacts the second mating surface 32 of the second battery holder 2B and joins the bonding layer 4 with the second mating surface 32. Further, adhesive 40 can also reside between tips of the side wall extensions 23 and the second mating surface 32. In this case, tips of the side wall extensions 23, which butt against the second mating surface 32 of the second battery holder 2B, are bonded to the second mating surface 32 via interposed adhesive 40.

When the second battery holder 2B is viewed in plan view, the common boundary between three adjacent rechargeable battery cells 1 disposed at the vertices of a triangle forms of a triangular region 35, and protruding posts 33 are formed in each triangular region 35. In the structure described above, protruding posts 33 are established in triangular regions 35 at the boundaries of the rechargeable battery cells 1 stored with a "log pile" cross section. Accordingly, it is possible to efficiently store a large number of rechargeable battery cells in a compact "log pile" configuration while disposing the protruding posts 33 in a space-saving manner. The second battery holder 2B has protruding posts 33 provided in the triangular regions 35 at the boundaries between rechargeable battery cells 1 housed in second holder cylindrical sections 31. The second battery holder 2B shown in FIG. 5 has protruding posts 33 established in all the triangular regions 35 at boundaries between second holder cylindrical sections 31. Since protruding posts 33 and filling grooves 41 are provided in all the triangular regions 35, 25 at the boundaries between rechargeable battery cells 1 in this type of battery holder 2, it has the characteristic that the first battery holder 2A and the second battery holder 2B can be reliably connected and strongly attached. Moreover, since protruding posts 33 are inserted into all of the first battery holder 2A filling grooves 41, the battery holder 2 has the characteristic that the amount of adhesive 40 filled into each filling groove 41 can be reduced to lower manufacturing cost.

However, the second battery holder does not necessarily have to have protruding posts in all of the triangular regions, and instead protruding posts can be provided only in selected triangular regions. The second battery holder 2B shown in FIG. 15 is configured with protruding posts 33 established only in selected triangular regions 35 at the boundaries between rechargeable battery cells housed in second holder cylindrical sections 31. Here, the triangular regions 35 where protruding posts 33 are established are selected such that each rechargeable battery cell 1 is adjacent to at least one protruding post 33. With this structure, the number of protruding posts 33 is reduced making assembly more efficient. At the same time, since each rechargeable battery cell 1 is adjacent to a protruding post 33, it has the characteristic that the first battery holder 2A and the second battery holder 2B can be reliably connected via the bonding layer 4 while stably retaining all of the rechargeable battery cells 1.

### (Fastening screws 39)

Further, the battery holder 2 shown in FIGS. 4 and 5 has the first battery holder 2A and the second battery holder 2B fastened together at the perimeter with fastening screws 39. The battery holder 2 shown in the figures has the shape of a box, which is rectangular in plan view extending in length in one direction. The first battery holder 2A and the second battery holder 2B are connected together with fastening screws 39 at both ends in the lengthwise direction of the battery holder 2. The second battery holder 2B shown in the figures is provided with three screw insertion holes 38 at each end to insert the fastening screws 39, and the first battery holder 2A is provided with three screw receptacle holes 28 at each end disposed opposite the screw insertion holes 38 to accept the fastening screws 39. By screw connection with fastening screws 39 at both ends, this battery holder 2 is held together with additional strength. In a structure where the first battery holder 2A and the second battery holder 2B are screwed together at the perimeter of the battery holder 2, the first battery holder 2A and the second battery holder 2B are attached together via protruding posts 33 and the bonding layer 4 at least in the central portion of the battery holder 2. Accordingly, the battery holder 2 can be configured at least with protruding posts 33 disposed only in the central portion of the second battery holder 2B.

### (Bonding Layer 4)

As the adhesive 40 that forms the bonding layer 4, for example, material that is liquid or gelatinous in the uncured state can be suitably applied. By using liquid adhesive 40 that is preferably high in viscosity, outflow of adhesive 40 added to the filling grooves 41, downward flow into gaps between first holder cylindrical sections 21 and the rechargeable battery cells 1, and leakage to the outside can be prevented. Accordingly, viscosity of the adhesive 40 in the uncured state is adjusted to be high enough to prevent it from flowing when its depth is equal to that of the filling grooves 41. Bonding agents such as silicone that are flame-retardant and capable of bonding with metals and resins can be used as the adhesive 40.

### (Lead Plates 5)

The plurality of rechargeable battery cells 1 housed in the battery holder 2 are connected together via lead plates 5 on the outside surfaces (upper and lower surfaces in the figures) of the battery holder 2. The lead plates 5 connect end plane electrodes 1x of the rechargeable battery cells 1 to electrically connect them in series or parallel. The battery module 9 shown in the figures is provided with a plurality of first lead plates 5A disposed on the bottom surface of the battery holder 2 connected to the second electrodes 1b of the rechargeable battery cells 1, a plurality of second lead plates 5B disposed on the upper surface of the battery holder 2 connected to the first electrodes 1a of the rechargeable battery cells 1, and a plurality of bus-bar plates 6 that extend vertically on the sides of the battery holder 2 to electrically connect ends of the first lead plates 5A and the second lead plates 5B. The lead plates 5 and bus-bar plates 6 are made of metal plate that has superior conductivity such as nickel or aluminum. In the examples shown in FIGS. 3-5, 160 rechargeable battery cells 1 are arranged as a series connection of 8 groups of 20 battery cells connected in parallel. However, the number and disposition of the rechargeable battery cells 1 as well as the number of battery cells connected series or parallel are not limited to this example and can be adapted as required.

The power source apparatus 100 shown in FIG. 2 connects the plurality of rechargeable battery cells 1 housed in the battery holder 2 via the lead plates 5 to form the battery module 9, and the battery module 9 is held in an outer case 10. In addition, in the power source apparatus 100 shown in FIG. 2 has a circuit board 17 disposed on the side of the battery module 9. The circuit board 17 is provided with charge/discharge circuitry for charging and discharging the rechargeable battery cells 1 and protection circuitry that monitors rechargeable battery cell 1 voltage and temperature and cuts off current in the event of abnormality. The circuit board 17 is disposed in a designated location via a circuit board holder 18.

### (Outer Case 10)

As shown in FIG. 1, the outer case 10 has a box shaped outline with a hollow interior where the battery module 9 is housed. The outer case 10 shown in the figures is an assembly of a plurality of plate components. The outer case 10 example shown in the exploded oblique view of FIG. 2, is made in a box shape by connecting a top plate 11, left and right side plates 12 and 13, front and rear end plates 14 and 15, and a bottom plate 16. However, the outer case can also be formed as an integrated unit or with a split structure such as a divided configuration having a right and left case. The outer case 10 described above is made of material with superior strength such as metal. Alternatively, for improved insulation, the outer case 10 can also be made of resin material such as polycarbonate.

### (Power Source Apparatus Method of Manufacture)

The following describes one example of the method of manufacture of the power source apparatus detailed above.

### (1) Preparation Step

In this step, a first battery holder 2A and a second battery holder 2B are prepared. The first battery holder 2A is prepared with a plurality of first holder cylindrical sections 21 that retain one end of the plurality of rechargeable battery cells 1, a first mating surface 22 formed at the interconnected end plane of the plurality of first holder cylindrical sections 21, and a plurality of side wall extensions 23 established between adjacent rechargeable battery cells 1 in a manner extending along the sides of the rechargeable battery cells 1 protruding from the first mating surface 22. Exposed regions 24 between adjacent side wall extensions 23 locally expose part of the side walls 1c of the rechargeable battery cells 1 held in first holder cylindrical sections 21. The second battery holder 2B is prepared with a plurality of second holder cylindrical sections 31 that retain the other end of the plurality of rechargeable battery cells 1, a second mating surface 32 formed at the interconnected end plane of the plurality of second holder cylindrical sections 31, and a plurality of protruding posts 33 formed protruding out from the second mating surface 32 in boundary regions between adjacent second holder cylindrical sections 31, namely in valley regions between adjacent rechargeable battery cells 1. In the assembled state where the first battery holder 2A and the second battery holder 2B are joined together, each protruding post 33 is inserted between adjacent side wall extensions 23 but does not make contact with either the first mating surface 22 or the side wall extensions 23.

### (2) First Insertion Step

In this step, one end of each of the plurality of rechargeable battery cells 1 is inserted into each of the plurality of first battery holder 2A cylindrical sections 21.

### (3) Filling Step

In this step, regions surrounded by rechargeable battery cell 1 side walls 1c exposed through cell exposed region 24 and the plurality of side wall extensions 23 delineate the filling grooves 41, and uncured adhesive 40 is filled into those filling grooves 41. As shown in FIG. 8, filling grooves 41 are established in the triangular regions 25 located in valleys (spaces in the "log pile" cross section) between three adjacent rechargeable battery cells 1 disposed at the vertices of a triangle as viewed in plan view. Each triangular region 25 is established by three side wall extensions 23 and rechargeable battery cell 1 side walls 1c exposed through cell exposed regions 24 between the side wall extensions 23. Adhesive 40 is supplied in specified amount to designated positions, for example, by a scanning dispenser.

In this step, the amount of adhesive 40 supplied to a filling groove 41 can be adjusted such that some of the adhesive 40 pushed upward by protruding post 33 insertion during the subsequently described second insertion step reaches the second mating surface 32 of the second battery holder 2B (see FIGS. 9-11). When adhesive 40 rises to this level and is hardened in bond curing step described below, the bonding layer 4 bonds with the second mating surface 32, to more strongly join the first battery holder 2A and the second battery holder 2B. However, the amount of adhesive 40 in the filling grooves 41 can also be less than that required to reach the second battery holder 2B second mating surface 32 when displaced by protruding post 33 insertion. In this case, while the bonding layer 4 does not extend to the second mating surface 32 of the second battery holder 2B, the second battery holder 2B will still be bonded to the first battery holder 2A by the protruding posts 33 that bond with the bonding layer 4.

### (4) Second Insertion Step

As shown in FIGS. 9-11, in this step, the second battery holder 2B is joined with the first battery holder 2A while inserting the other end of each of the plurality of rechargeable battery cells 1 into each of the plurality of cylindrical sections 31 in the second battery holder 2B. At that time, second battery holder 2B protruding posts 33 insert into first battery holder 2A filling grooves 41 and are embedded in the adhesive 40 in those filling grooves 41. The first battery holder 2A and the second battery holder 2B are joined with accurate alignment by butting the ends of first battery holder 2A side wall extensions 23 against the second mating surface 32 of the second battery holder 2B.

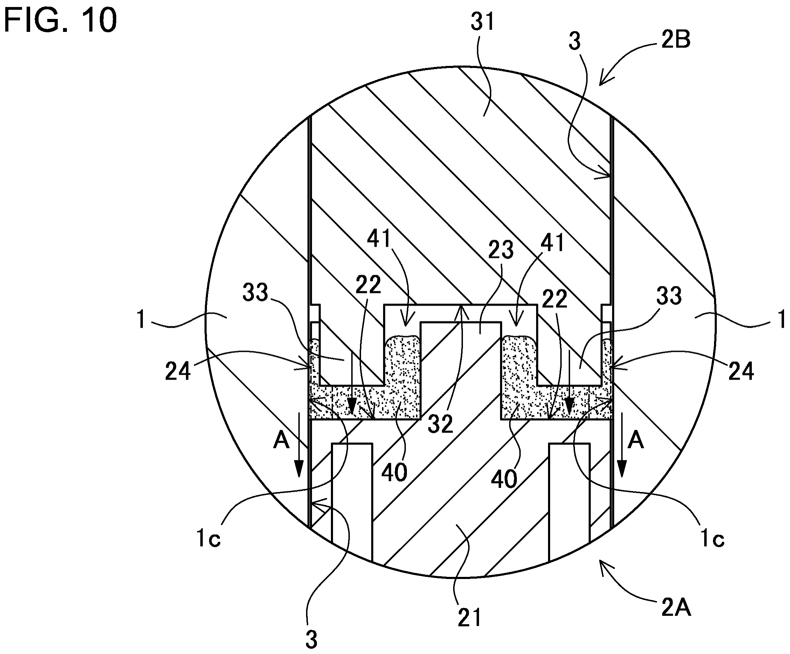

At this time, the protruding posts 33 formed in valley regions between battery cells 1 in the second battery holder 2B are inserted into the filling grooves 41 in the first battery holder 2A. Protruding posts 33 inserted in the filling grooves 41 press into uncured adhesive 40 in the filling grooves 41 and push that uncured adhesive 40 outward. Here, adhesive 40 pushed out of the filling grooves 41 flows along the side walls 1c of the rechargeable battery cells 1 as indicated by arrow A in FIG. 10. Since adhesive 40 forced out of the filling grooves 41 is press-fit between rechargeable battery cell 1 side walls 1c and the inner surfaces of first holder cylindrical sections 21, rechargeable battery cells 1 are strongly bonded with the inner surfaces of the first battery holder 2A.

Rather than directly dispensing adhesive 40 between rechargeable battery cells 1 and first holder cylindrical sections 21, filling grooves 41 in the first battery holder 2A are filled with adhesive 40 and the second battery holder 2B is then fitted over the rechargeable battery cells 1. When second battery holder 2B protruding posts 33 press into the adhesive 40 filled filling grooves 41, adhesive 40 is pushed into the space between the rechargeable battery cells 1 and holder cylindrical sections 20. Therefore, depending on the amount of adhesive 40 in the filling grooves 41, the adhesive may be press-fit not only between the rechargeable battery cells 1 and first holder cylindrical sections 21, but also between the rechargeable battery cells 1 and second holder cylindrical sections 31. In this case, rechargeable battery cells 1 are firmly attached not only to the first battery holder 2A, but also to the second battery holder 2B.

### (5) Bond Curing Step

In this step, the adhesive 40 is cured and protruding posts 33 are bonded to the first battery holder 2A and rechargeable battery cells 1 via the adhesive 40 bonding layer 4. This bonds the first battery holder 2A and the second battery holder 2B together.

### INDUSTRIAL APPLICABILITY

The power source apparatus and method of manufacture of the present disclosure can be suitably used in construction machinery and as the driving power source in hybrid and electric vehicles. Further, it can be effectively utilized as the driving power source in self-propelled delivery robots, electric carts used for delivery and on golf courses, as well as in electric scooters. In addition, it can be used as the power source in electric assist bicycles, and suitably applied as the power source in portable electric devices such as wireless communication devices, electric cleaners, and electric hand tools. It can also serve as a stationary power storage device in applications such as a computer server backup power source and as a power supply system used in the household, office, and factory.

### REFERENCE SIGNS LIST

- 100: power source apparatus
- 1: rechargeable battery cell
- 1x: end plane electrode
- 1a: first electrode
- 1b: second electrode
- 1c: (battery cell) side wall
- 2: battery holder
- 2A: first battery holder
- 2B: second battery holder
- 3: cell storage space
- 4: bonding layer
- 5: lead plate
- 5A: first lead plate
- 5B: second lead plate
- 6: bus-bar plate
- 9: battery module
- 10: outer case
- 11: top plate
- 12: (left) side plate
- 13: (right) side plate
- 14: (front) end plate
- 15: (rear) end plate
- 16: bottom plate
- 17: circuit board
- 18: circuit board holder
- 20: holder cylindrical section
- 21: first holder cylindrical section
- 22: first mating surface
- 23: side wall extension
- 24: cell exposed region
- 25: triangular region
- 26: end plane plate
- 27: electrode window
- 28: screw receptacle hole
- 31: second holder cylindrical section
- 32: second mating surface
- 33, 33A, 33B, 33C: protruding post
- 33a, 33d: ridge
- 33b, 33c: (protruding post) side
- 33e: groove
- 35: triangular region
- 36: end plane plate
- 37: electrode window
- 38: screw insertion hole
- 39: fastening screw
- 40: adhesive
- 41: filling groove
- 42, 43, 44: bonding gap

## Claims

1. A power source apparatus comprising:
a plurality of rechargeable battery cells that have circular cylindrical side walls and extend in the lengthwise direction; and
a battery holder having cell storage space to hold the plurality of rechargeable battery cells in mutually parallel disposition;
wherein the battery holder is divided at a midpoint in the lengthwise direction of the rechargeable battery cells into a first battery holder and a second battery holder that are joined together by an intervening bonding layer;
the first battery holder comprising:
a plurality of first holder cylindrical sections each configured to store one end of a rechargeable battery cell;
a first mating surface formed at the interconnected end plane of the plurality of first holder cylindrical sections; and
a plurality of side wall extensions disposed between adjacent rechargeable battery cells protruding from the first mating surface and extending along the side walls of the rechargeable battery cells;
wherein cell exposed regions are formed between adjacent side wall extensions where part of the side wall of each rechargeable battery cell stored in a first holder cylindrical section is locally exposed, and filling grooves that are filled with adhesive to establish the bonding layer are formed in areas surrounded by rechargeable battery cell side walls exposed through cell exposed regions and a plurality of side wall extensions;
the second battery holder comprising:
a plurality of second holder cylindrical sections each configured to store the other end of a rechargeable battery cell;
a second mating surface formed at the interconnected end plane of the plurality of second holder cylindrical sections; and
protruding posts disposed opposite filling grooves in the first holder projecting out from the second mating surface at boundary regions (valleys) between adjacent second holder cylindrical sections;
wherein the protruding posts are disposed such that when the first and second battery holders are connected, protruding posts are inserted into the filling grooves but no contact is made with the first mating surface or the plurality of side wall extensions; and
when the first and second battery holders are connected, rechargeable battery cells are held in cell storage space established by first holder cylindrical sections and second holder cylindrical sections, tips of the side wall extensions abut against the second mating surface to align the first and second battery holders, and protruding posts inserted in the filling grooves are embedded in adhesive to bond with the first battery holder and the rechargeable battery cells via the adhesive bonding layer thereby bond-connecting the first and second holders together to form the power source apparatus.

2. The power source apparatus as recited in claim 1, wherein the cell storage space is arrayed to store the plurality of rechargeable battery cells in a "log pile" configuration.

3. The power source apparatus as recited in claim 2, wherein the filling grooves in the first battery holder are disposed in triangular regions formed at the boundary of three rechargeable battery cells at vertices of a triangle viewed in plan view, and
protruding posts in the second battery holder are disposed in triangular regions formed at the boundary of three rechargeable battery cells similarly arranged at vertices of a triangle viewed in plan view.

4. The power source apparatus as recited in claim 3, wherein filling grooves are formed in all of the triangular regions at boundaries between the rechargeable battery cells in the first battery holder, and
protruding posts are formed in all of the triangular regions in the second battery holder.

5. The power source apparatus as recited in claim 3, wherein filling grooves are formed in all of the triangular regions at boundaries between the rechargeable battery cells in the first battery holder, and
protruding posts are provided only in selected triangular regions in the second battery holder such that at least one protruding post is adjacent to each rechargeable battery cell.

6. The power source apparatus as recited in claim 3, wherein the battery holder has an elongated rectangular shape viewed in plan view,
the first battery holder and the second battery holder are screw connected with fastening screws at both lengthwise ends of the battery holder, and
the first battery holder and the second battery holder are bonded together via protruding posts and the bonding layer at least in the center region in the lengthwise direction of the battery holder.

7. The power source apparatus as recited in any one of claims 1 to 6, wherein the bonding layer bonds not only with the protruding posts but, also with the second mating surface of the second battery holder.

8. The power source apparatus as recited in any one of claims 1 to 6, wherein the protruding posts have a circular cylindrical or polygonal cylindrical (prismatic) shape.

9. The power source apparatus as recited in claim 8, wherein the protruding posts are shaped with ridges or grooves that extend in the lengthwise direction on cylindrical side surfaces.

10. The power source apparatus as recited in any one of claims 1 to 6, wherein the protruding posts have a conical frustum (truncated cone) or frustum of a polygonal cone (truncated polygonal cone) shape that narrows in cross sectional area towards the tip.

11. A method of manufacture of a power source apparatus comprising a plurality of rechargeable battery cells that have circular cylindrical side walls and extend in the lengthwise direction, and a battery holder having cell storage space to hold the plurality of rechargeable battery cells in mutually parallel disposition, the battery holder comprising a first battery holder and a second battery holder divided at a midpoint in the lengthwise direction of the rechargeable battery cells;
the method comprising:
a preparation step that prepares the first battery holder and the second battery holder,
the first battery holder comprising a plurality of first holder cylindrical sections each configured to store one end of a rechargeable battery cell, a first mating surface formed at the interconnected end plane of the plurality of first holder cylindrical sections, and a plurality of side wall extensions disposed between adjacent rechargeable battery cells protruding from the first mating surface and extending along the side walls of the rechargeable battery cells, such that cell exposed regions are formed between adjacent side wall extensions where part of the side wall of each rechargeable battery cell stored in a first holder cylindrical section is locally exposed;
the second battery holder comprising a plurality of second holder cylindrical sections each configured to store the other end of a rechargeable battery cell, a second mating surface formed at the interconnected end plane of the plurality of second holder cylindrical sections, and protruding posts projecting out from the second mating surface at boundary regions (valleys) between adjacent second holder cylindrical sections, the protruding posts are disposed such that when the first and second battery holders are connected, the protruding posts are inserted between side wall extensions but no contact is made with the first mating surface or the plurality of side wall extensions;
the method further comprising:
a first insertion step that inserts one end of each rechargeable battery cell into the plurality of first holder cylindrical sections;
a filling step that fills uncured adhesive into filling grooves that are established by rechargeable battery cell side wall regions exposed through the cell exposed regions and a plurality of side wall extensions;
a second insertion step that connects the second battery holder to the first battery holder while inserting the other end of each rechargeable battery cell into the plurality of second holder cylindrical sections and inserts the protruding posts of the second battery holder into the filling grooves of the first battery holder to embed the protruding posts in adhesive in the filling grooves; and
a bond curing step that cures the adhesive to bond the protruding posts to the first battery holder and the rechargeable battery cells via adhesive in the bonding layer and thereby bonds the first and second battery holders together;
wherein during the second insertion step, each protruding post inserted in a filling groove applies pressure on adhesive in the filling groove to force it in an outward direction, and this has the characteristic that some of the adhesive is pressed against the side walls of the rechargeable battery cells and surfaces of the first battery holder for bond connection.

12. The method of manufacture of a power source apparatus as recited in claim 11, wherein the amount of adhesive used in the filling step is set such that, in the second insertion step, at least part of the adhesive pressed outward by the protruding posts reaches the second mating surface of the second battery holder, and in the bond curing step, the bonding layer bonds with the second mating surface.

13. The method of manufacture of the power source apparatus as recited in claim 11, wherein in the second insertion step, a part of the adhesive pressed outward by the protruding posts is pressed into gaps between the rechargeable battery cells and the side walls of the cell storage space.
